Europäisches Patentamt

European Patent Office

Office européen des brevets

(19)

(11) **EP 1 261 176 A1**

(12) **EUROPEAN PATENT APPLICATION**

(43) Date of publication:
**27.11.2002 Bulletin 2002/48**

(51) Int Cl.⁷: **H04L 12/56**

(21) Application number: **02010943.5**

(22) Date of filing: **16.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **21.05.2001 JP 2001150780**

(71) Applicant: **Pioneer Corporation
Meguro-ku, Tokyo (JP)**

(72) Inventors:
• **Mito, Kenji, Corporate Research and Dvpt. Lab.
Tsurugashima-shi, Saitama 350-2288 (JP)**
• **Sotomaru, Toshihiro, c/o Corporate Research &
Tsurugashima-shi, Saitama 350-2288 (JP)**

(74) Representative:
**Manitz, Finsterwald & Partner GbR
Postfach 31 02 20
80102 München (DE)**

(54) **Voice transmission over Bluetooth**

(57)     The invention is an improvement in efficient use of a radio communications channel, and for inhibiting transmission of an unwanted radio wave on a SCO communications link established between Bluetooth radio communications terminals as well as reducing power consumption. A sound signal that transmitted along a SCO communications link is detected. When the signal is absent, the communications link is once disconnected and, the communications link is connected again when a sound signal is detected. Instruction for disconnection and reconnection of a communications link may be done by a control signal coming from a call button provided on the communications terminals.

FIG. 2

EP 1 261 176 A1

**Description**

BACKGROUND OF THE INVENTION

1. Field of the Invention

The present invention relates to a radio communications terminal that establishes a radio communications link to another terminal, and transmits a signal via the communications link.

2. Description of the Related Art

The so-called "Bluetooth" radio communications system is generally known as a system where a plurality of radio communications terminals compose a radio communications network, and establishes a communications link in the radio communications network for transmission of signals.

The Bluetooth (hereinafter referred to as "BT") radio communications system is intended to connect via a radio communications link using a low power radio wave in the 2.4 GHz band. The system connects to a terminal apparatus located a short distance, such as a cellular phone and a laptop PC or a stereophonic audio system and a headphone, and transmit a wireless data signal or a sound signal.

In the BT radio communications system, signal transmission is performed between information terminal apparatus(hereinafter referred to as "BT apparatus") incorporating modules that satisfy the BT specifications (hereinafter referred to as "BT modules"). Of these BT apparatuses, a single BT apparatus is called the "Master" and each of the other BT apparatus is called a "Slave." The Master controls formation of a BT radio communications link and miscellularaneous communications procedures. A Slave is capable of transmitting a signal under the control by the Master.

The Master or Slave feature is not assigned to each BT module incorporated in a BT apparatus. Instead, each BT module has both the Master and Slave features as use either feature as required.

A signal transmission procedure between the Master and the Slave is explained below. A radio communications link conforming to the BT specifications is established between the BT modules, then signal transmission is made via the radio communications link. Signal transmission between BT modules is made in units of time slots (time length of each slot being 625 μS in principle) on a time axis. The BT modules use the time slots by turns to transmit signals. The signal transmission system between the Master and the Slave is the TDD (Time Division Duplexing) system, that belongs to half-duplex communications that alternately perform signal transmission and reception. For example, the communication speed between BT modules with radio communications link established is 1 Mbps at the maximum.

As a modulation method in the BT radio communications system, a frequency hopping spread spectrum system is employed. This modulation method switches the carrier frequency for a typical narrowband modulation method in a short period, which frequency switching is called frequency hopping. The BT radio communications system has a hopping frequency consisting of 79 waves, in frequency intervals of 1 MHz in the 2.4 GHz band. Such frequency hopping is performed per the aforementioned time slot (625 μS), so that frequency hopping is performed 1600 times per second.

The procedure for performing frequency hopping in accordance with a specific order and a specific frequency is called a hopping pattern. The hopping pattern is calculated based on a predetermined procedure from a BT device address that works as an identification number specific to each BT apparatus and the clock value used by each BT apparatus. It is natural that, the same hopping pattern must be used by the Master and the Slave that transmits data to each other.

The radio communications link in the BT radio communications system is of two types: Synchronous Connection-Oriented (hereinafter referred to as SCO) link that reserves predetermined time slots on the time axis, and Asynchronous Connection-less (hereinafter referred to as ACL) link that randomly uses time slots on the time axis for communications. The SCO link is a so-called circuit switching radio communications link, that is used for transmission of sound signals focusing on the real-time signal transmission. The ACL link is a so-called packet switching radio communications link where real-time signal transmission is not mandatory.

In the BT radio communications system, such two radio communications links can be used in a mixed way. For example, it is possible to insert the ACL link, as required into time slots not reserved by the SCO link, and perform data signal transmission along the ACL link, in the intervals between sound signal transmission along the SCO link.

Packets for sound signal transmission used by the SCO link are of three types, HV1, HV2 and HV3. These packets differ from each other in terms of the rate of the number of bits of error correction code to the number of bits in the sound signal data contained in respective packets. For example, the HV1 packet contains the sound signal data of 80 bits and the corresponding error correction code of 160 bits. The HV2 packet contains the sound signal data of 160 bits and the corresponding error correction code of 80 bits. The HV3 packet contains only the sound signal data of 240 bits.

A sound signal encoding method used in the BT radio communications system includes the logarithmic quantizing method that performs 8-bit quantization using 8-kHz sampling, and the CVSD (Continuous Variable Slope Delta modulation) encoding method that performs 1-bit quantization using 64-kHz sampling through so-called delta modulation.

As understood from the following expressions:

in case of logarithmic quantizing method

$$(80 \text{ bits} \div 8 \text{ bits}) \times 1/8 \text{ kHz} = 1.25 \text{ mS},$$

in case of CVSD encoding method

$$(80 \text{ bits}) \times 1/64 \text{ kHz} = 1.25 \text{ mS},$$

sound signal data of 80 bits corresponds to a sound signal of 1.25 mS in length irrespective of the method of use. And this time length occupies two time slots each being 0.625 mS in length in the BT radio communications system.

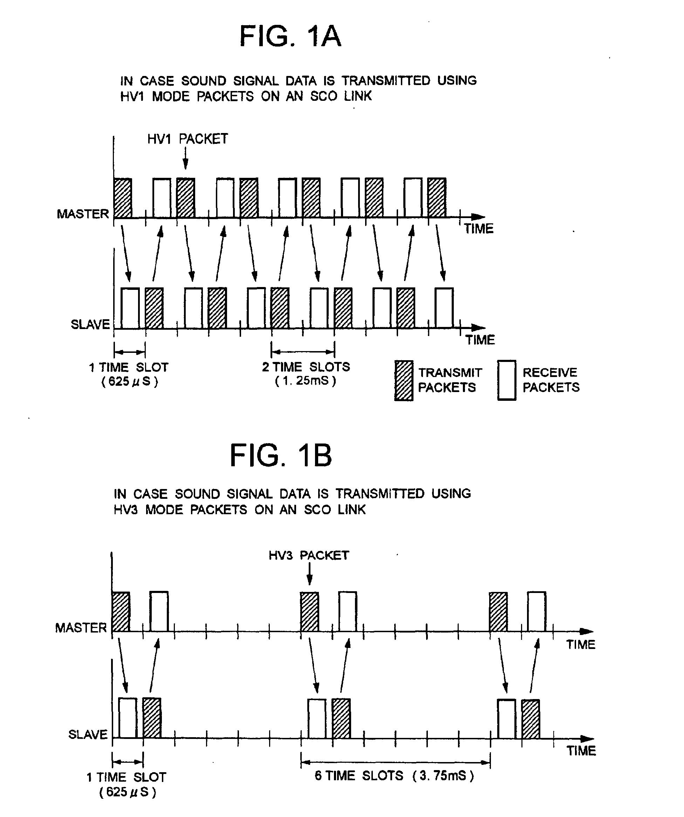

Thus, when a sound signal transmission is performed using HV1 packets, it is necessary to transmit a single HV1 packet per two slots between the Master and the Slave. In this case, time slots on the time axis are arranged as shown in Fig. 1A. The time slots are completely filled with packets transmitted from the Master and the Slave, for example HV1 packets transmitted from the Master, HV1 packets transmitted from the Slave, then HV1 packets transmitted from the Master.

On the other hand, when the sound signal transmission is performed using HV3 packets, a single HV3 packet can transmit sound signal data of 240 bits or 3.75 mS in length. This length corresponds to six time slots each being 0.625 mS in length in the BT radio communications system.

Thus, in case sound signal transmission is performed using HV3 packets, each of the Master and the Slave must transmit HV3 packets per six slots, as shown in Fig. 1B. Two time slots out of six time slots on the time axis are used, leaving four vacant slots. The ACL link may be set to such vacant slots, and these slots may be used for data signal transmission that does not require real-time transmit signal time series. Two channels of SCO link using HV3 packets may be provided to increase channels for sound signals.

It is generally known, that a sound signal is present in about 40 percent of the total circuit connection period in a typical telephone circuit engaged in a call. In a circuit switched system, a circuit that connects a calling terminal and a terminating call terminal remain connection until the call is released. Audio communications, however, are not under way in about 60 percent of the total circuit connection period.

This also applies when sound signal transmission is performed in the BT radio communications system. That is, in case the Master and the Slave use a circuit connected SCO link to perform sound signal transmission, it is necessary to constantly transmit packets, as shown in Fig. 1A and Fig. 1B. But, a sound signal to be transmitted is absent in 60 percent of the packets.

This considerably reduces the efficient use of time-division multiplex channels that use time slots of the BT radio communications system, and causes an unwanted emission to be radiated. This also leads to an increase in the power consumption at a BT radio communications terminal.

OBJECT AND SUMMARY OF THE INVENTION

The invention has been proposed to solve the foregoing problems, and aims at providing a BT radio communications terminal that halts transmission of unwanted packets, to improve the use efficiency of time-division channels and reducing useless power consumption.

The invention provides a radio communications terminal that establishes a radio communications channel to a remote terminal for transmitting a signal by using time slots that have undergone time-division processing and transmits a sound signal via the said radio communications channel, comprising a radio communications part which establishes said radio communications channel and transmits a sound signal via said radio communication channel, and a control part which controls establishment of the radio communications channel by said radio communications part, and transmission of the sound signal via said radio communication channel, characterized in that

said control part, after said radio communications channel is established, controls said radio communications part to disconnect or reestablish said radio communications channel, based on a disconnection instruction signal or a reestablishment instruction signal.

BRIEF EXPLANATION OF THE DRAWINGS

Fig. 1A and Fig. 1B are timecharts showing transmission of a sound signal by using packets of various modes over the SCO link.

Fig. 2 is a block diagram showing the configuration of a Bluetooth terminal according to the first embodiment of the invention.

Fig. 3 is a flowchart showing the operation of disconnection and reestablishment of the SCO link at a Bluetooth terminal according to the first embodiment of the invention.

Fig. 4 is a flowchart showing the operation of disconnection and reestablishment of the SCO link at a Bluetooth terminal working as a terminal associated with the Bluetooth terminal according to the first embodiment of the invention.

Fig. 5 is a flowchart showing the operation of disconnection and reestablishment of the SCO link according to a variation of the first embodiment.

Fig. 6 is a flowchart showing the operation of disconnection and reestablishment of the SCO link at a Bluetooth terminal working as a terminal associated with the Bluetooth terminal according to the variation of the first embodiment.

Fig. 7 is a block diagram showing the configuration of a Bluetooth terminal according to the second embodiment of the invention.

Fig. 8 is a flowchart showing the operation of disconnection and reestablishment of the SCO link at a Bluetooth terminal according to the second embodiment of the invention.

DETAILED DESCRIPTION OF THE PREFERRED EMBODIMENTS

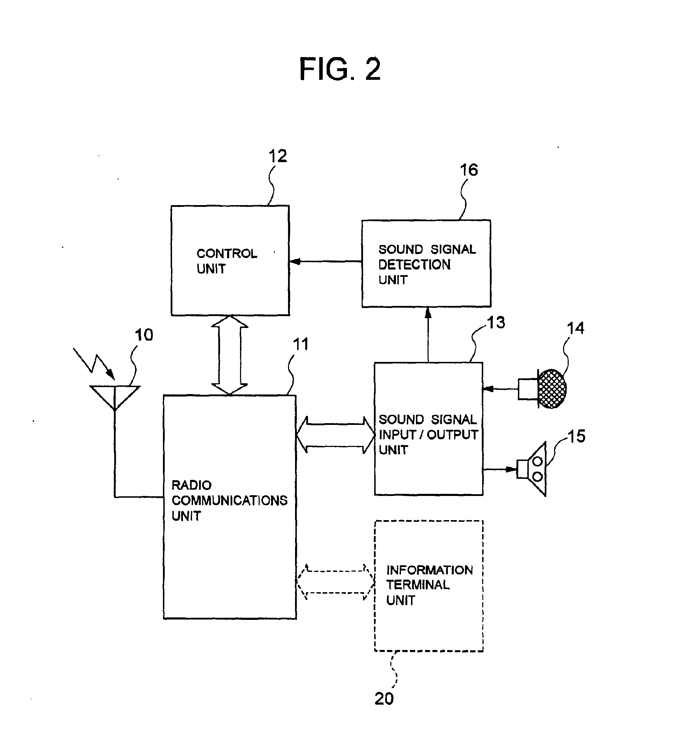

The configuration of the radio communications terminal according to the first embodiment of the invention is shown in Fig. 2.

In Fig. 2, an antenna 10 is used to transmit/receive a radio wave in the 2.4-GHz band, as a frequency band used by the BT radio communications system for communications with another radio communications terminal.

A radio communications unit 11 is mainly composed of a general-purpose BT module specified mainly in the BT Specifications. The BT module typically consists of a high-frequency processor connected to the antenna 10, a hopping frequency calculator for calculating the hopping frequency, a baseband signal processor for controlling transmit packets and the radio communications link, as well as processing error correction of a transmit signal and security control, a storage part such as a flash memory, and a CPU part for performing general control of the foregoing parts.

A control unit 12 controls the entire radio communications terminal shown in Fig.2, and is mainly comprised of a microcomputer (hereinafter referred to as a $\mu$ CPU) and a memory such as a RAM or ROM. An application program in the BT radio communications system according to the embodiment is stored in the memory and is executed on said $\mu$CPU. When the BT module in the radio communications unit 11 is controlled by the control unit 12, a general-purpose interface such as RS-232C and UART are used. Specifications for control are specified as HCI (Host Controller Interface) in the BT specifications.

A sound signal input/output unit 13 is comprised of for example a voice codec (coder/decoder) circuit. The voice codec circuit performs analog-to-digital conversion of a sound signal input from a microphone 14, and supplies a resulting digital signal to the radio communications unit 11. In the meanwhile, the voice codec circuit performs digital-to-analog conversion of voice data received from the radio communications unit 11, and provides the regenerated output of a resulting signal to a loudspeaker 15. As an audio encoding and decoding method in the sound signal input/output unit 13, the logarithmic quantization method or CVSD encoding method is used, as mentioned above.

A sound signal detection unit 16 is a circuit for detecting whether a sound signal is present or absent in either the audio input part or audio output part of the sound signal input/output unit 13. Detection of a sound signal may be made on an analog sound signal or a digital sound signal. A predetermined margin may be provided on the detection level and the duration of a sound signal to be detected, in order to prevent detection error caused by a noise. The sound signal detection unit 16 transmits the presence/absence of a sound signal to the control unit 12, on a regular basis or at every change point of detection or non-detection of a sound signal.

As shown in Fig. 2, various information terminal unit 20 such as a PC and a car navigation apparatus, as well as the sound signal input/output unit 13, may be connected via a general-purpose interface to the radio communications unit 11.

Processing in the first embodiment will be described referring to the following example:

In the following example, it is assumed that a BT radio communications system is used to connect a car navigation apparatus mounted on a vehicle, and a remote terminal which has a voice input/output function. The car navigation apparatus is operated by way of the voice recognition feature of the car navigation apparatus. For example, a microphone integrated with a headphone (hereinafter referred to as a headset) is assumed as the remote terminal.

Voice input from the headset is used to operate various features of the car navigation apparatus. Various instructions and responses output from the car navigation apparatus are transmitted to the headset as voice output.

Both terminals in communications on the BT radio communications system, need not incorporate the feature to control detection of the presence/absence of a sound signal being transmitted on the SCO link and, disconnection and reestablishment of the communications link. Such a feature is required only in either of the terminals. In this example, the headset is provided with the configuration of a BT radio communications terminal according to the embodiment, and the car navigation apparatus is provided with the configuration of a typical BT radio communications terminal.

As shown in Fig. 2, the BT radio communications terminal on the headset comprises, the sound signal input/output unit 13, the microphone 14, the speaker 15 (a headset in this embodiment), and the sound signal detection unit 16, on top of the basic configuration of the antenna 10, the radio communications unit 11, and the control unit 12. The BT radio communications terminal on the car navigation apparatus comprises, only the car navigation apparatus as an information terminal unit 20, on top of the basic configuration.

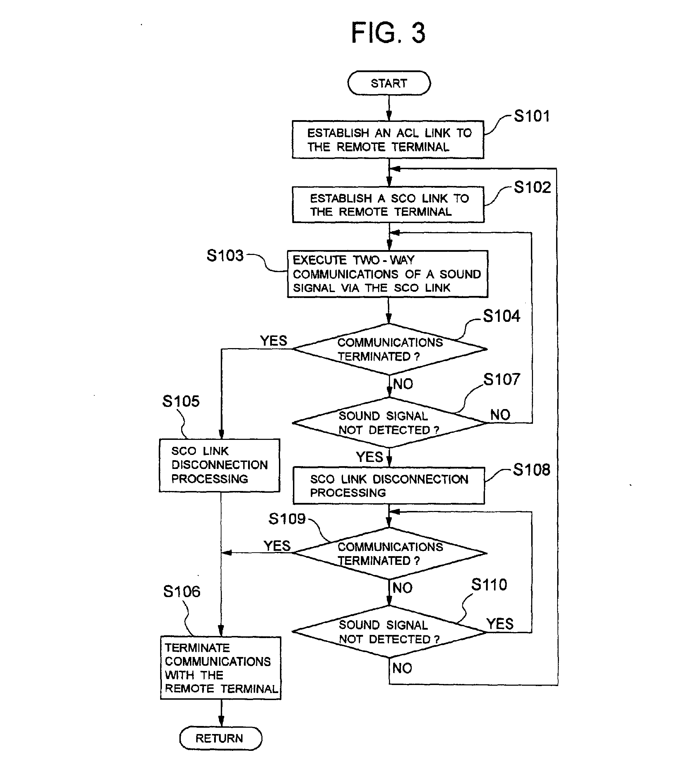

Thus, a subroutine program (Fig.3) based on this embodiment is included in the application program in the BT radio communications terminal on the headset. On the other hand, a general-purpose application program used in a typical BT radio communications terminal is installed in the car navigation apparatus.

The processing subroutine that is based on this embodiment included in the application program on the headset will be described referring to the flowchart of Fig. 3.

The subroutine program is installed in the memory part in the control unit 12 shown in Fig. 2. The subroutine program is executed by the μCPU in the control unit 12.

In step 101 in the flowchart of Fig. 3, an ACL link is made between the BT radio communications terminal on the headset and the BT radio communications terminal on the car navigation apparatus. This is because it is necessary to exchange various control information via the ACL link in order to enable the BT radio communications terminal.

Thereafter, in step 102, the SCO link is made between both BT radio communications terminals. Such processing may be activated by either unit. For example, the processing may be activated when the car navigation apparatus is powered on. The processing may be activated, when the user performs a predetermined setting operation to wish unit operation via voice input/output on the headset or car navigation apparatus. This processing establishes the SCO link between both BT terminals, and starts two-way communications of the sound signal between the BT apparatus via the SCO link (step 103).

In this way, operation of the car navigation apparatus is made using the voice recognition feature, and voice synthesis feature of the car navigation apparatus by way of a sound signal from the headset. And instructions or responses from the car navigation apparatus are transmitted to the headset as sound signal.

Establishment of the ACL link and the SCO link requires the Inquiry processing to make inquiries on a distant BT apparatus, and the Page processing to page the distant BT apparatus. The processing belongs to a typical communications procedure in the BT radio communications system, so that the corresponding description is omitted.

In step 104, it is determined whether to terminate communication processing using a sound signal. This may be done by detecting whether the car navigation apparatus is powered off. Communications using a sound signal may be terminated when the user makes setting so that the operation using the voice recognition feature will be terminated.

In case it is determined that communication processing using a sound signal is terminated, execution proceeds to step 105. An SCO link disconnect instruction is transmitted to the BT module in the radio communications unit 11, and the BT module executes the processing. This causes the SCO link between the headset and the car navigation apparatus to be disconnected, and transmission of packets using the communications link to be terminated, thereby terminating the communication processing using a sound signal between the headset and the car navigation apparatus (step 106).

In case it is determined that communication processing using a sound signal is not terminated in step 104, execution proceeds to step 107. It is determined whether a sound signal is not detected or detected, during the communication processing via the SCO link. This is done, for example by regularly monitoring the input/output of the audio codec circuit in the sound signal input/output unit 13, and determining whether absence of the sound signal has continued for a predetermined duration by the sound signal detection unit 16.

Noise constantly occur in a typical vehicle, such as a road noise or music from a car stereo or a car radio. Thus, the sound signal detection unit 16 may provide a predetermined threshold value in the voice level, to be detected in detecting absence of the sound signal. Or, the sound signal detection unit 16 may provide a predetermined frequency band limitation for the voice to be detected. This eliminates the sound signal detection error caused by such noise.

Malfunction that accompanies error detection of a sound signal may be prevented by providing a voice pattern recognition part in the sound signal detection unit 16. For example, in this embodiment, various parameters such as the voice pattern of the user, are registered with the memory of said recognition part. The sound signal detection unit 16 recognizes that the voice of the user is detected, only when the detected voice pattern matches that registered in the memory.

When absence of the sound signal is not determined in step 107, that is, in case a sound signal is detected, execution returns to step 103, and two-way communications of the sound signal using the SCO link continues.

In case absence of the sound signal is determined in step 107, that is, in case a sound signal is not detected, execution proceeds to step 108, and the SCO link disconnect processing is performed, same as when communications are terminated in step 105.

Execution then proceeds to step 109. It is determined whether communications are terminated, same as the step 104. As mentioned above, termination of communication is determined when the car navigation apparatus is powered off, or when the user has followed a predetermined communications termination procedure, then execution proceeds to step 106, where voice communications between the headset and the car navigation apparatus is terminated.

In case termination of voice communications is not detected, execution proceeds to the next step 110, and it is determined whether absence of the sound signal has continued. The control unit 12 monitors whether start of communications using a sound signal is intended between both apparatuses, after the SCO link has been disconnected in step 108. In case a sound signal is not detected in step 110, that is, in case absence of the sound signal persists, execution returns to step 109 and repeats the aforementioned monitoring.

In case a sound signal is detected in step 110, execution returns to step 102, and establishment of the SCO link is made again between the BT radio communications terminal on the headset and the BT radio communications terminal on the car navigation apparatus.

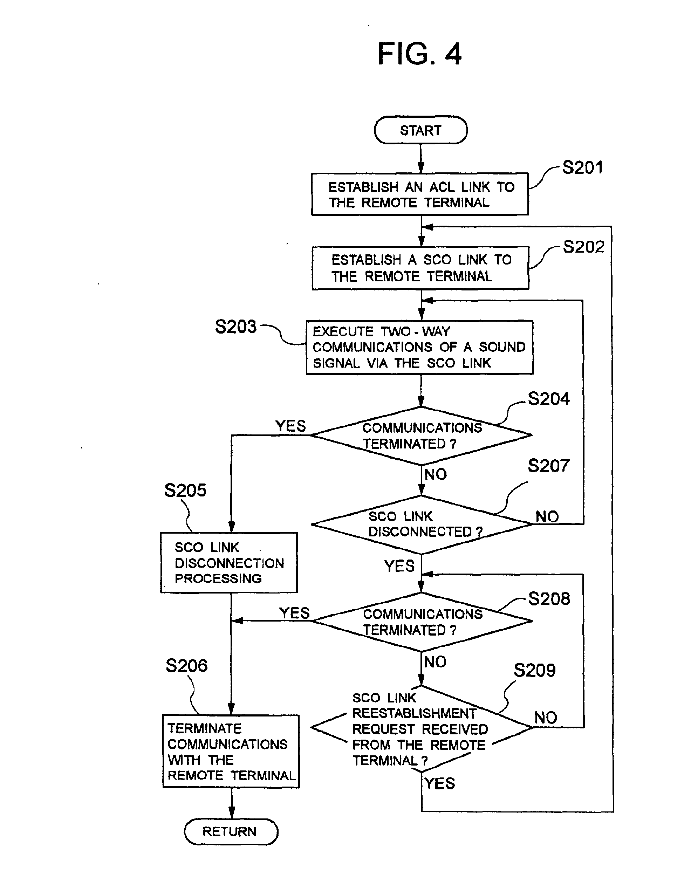

Operation of the application program in the BT radio communications terminal on the car navigation apparatus corresponding to the processing in the headset shown in Fig. 3 will be described referring to the flowchart of Fig. 4.

Processing shown in the flowchart of Fig. 4 is a general SCO link control procedure in a BT radio communications terminal, so that the processing will be simply outlined below.

The BT radio communications terminal on the car navigation apparatus requires a general configuration only, and need not comprise a sound signal detection unit 16 shown in the block diagram of Fig. 2.

In the flowchart of Fig. 4, the procedure comprising start of processing, establishment of an ACL link (step 201), establishment of an SCO link (step 202), voice communications via the SCO link (step 203),and determination of termination of communications (step 204), is the same as the case in Fig. 3.

In case it is determined that the two-way communications processing using the sound signal is terminated in step 204, execution proceeds to step 205, and the SCO link is disconnected, thereby terminating communications with the headset (step 206).

In case it is determined that the communication processing using a sound signal is not terminated in step 204, execution proceeds to step 207, and it is determined whether an SCO link disconnect request is transmitted from the BT radio communications terminal on the headset. In case the SCO link is not disconnected, execution returns to step 203, and the aforementioned voice communication processing is repeated.

In case it is determined that an SCO link disconnect request is transmitted from the BT radio communications terminal on the headset in step 207, execution proceeds to step 208. Same as the step 204, it is determined again whether the communication processing using a sound signal is terminated.

In other words, it is determined whether the application program in the headset has temporarily disconnected the SCO link in accordance with the flowchart of Fig. 3, because silence is detected although voice communication processing between both apparatuses is under way, or termination of the voice communication processing between both apparatuses is actually intended.

In case it is determined that the communication processing using a sound signal between both apparatuses is terminated in step 208, execution proceeds to step 206 to terminate the communication processing using a sound signal with the headset.

In case the voice communication processing between both apparatuses is still under way, execution proceeds to step 209 to determine whether the request for reestablishing the once disconnected SCO link is received from the headset. In case the request is received from the headset, execution returns to step 202, and establishment of the SCO link is made with the BT module on the headset. Otherwise, in case the request is not received from the headset, execution returns to step 208, where the monitoring for termination of voice communications is repeated.

As detailed in the description of the flowchart shown in Fig. 3 and Fig. 4, according to this embodiment, in case a silent period has continued for a predetermined duration in the sound signal transmission using the SCO link between the BT radio communications terminals, the SCO link is disconnected once. Then the SCO link is reestablished when a sound signal is detected again. As such, packets associated with the SCO link are not transmitted in the silent period that is estimated to reach 60 percent of the total call period. This considerably reduces the power consumption of the BT module.

Establishing an ACL link that aims at using vacant time slots that take place while the SCO link is disconnected to perform data transmission improves the use efficiency of time slots in the BT radio communications system.

A delay time due to the processing of sound signal detection and the SCO link establishing takes place while a sound signal is being detected and the SCO link being reestablished, after the SCO link is disconnected. This may cause so-called "initial call disconnection" where the beginning of a sound signal transmitted via the SCO link that has been reestablished is lost.

In order to prevent such a problem, for example, a memory of the FIFO (first-in first-out) type having a capacity exceeding the delay time may be provided at the sound signal input/output unit 13 of the BT radio communications terminal on the headset. This constantly stores a sound signal of a predetermined length in the memory before transmitting the sound signal.

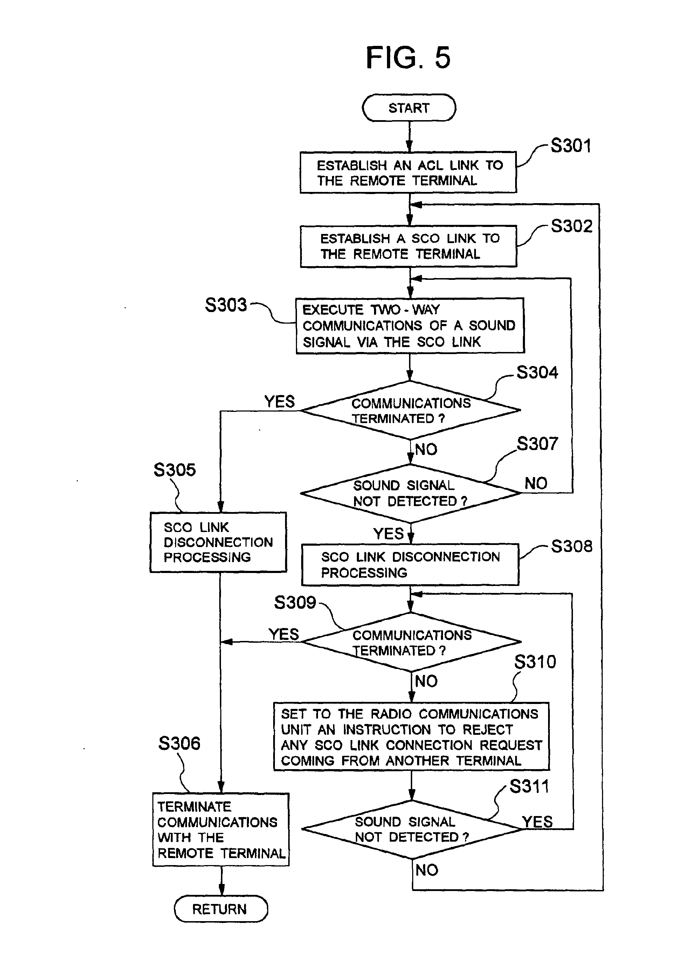

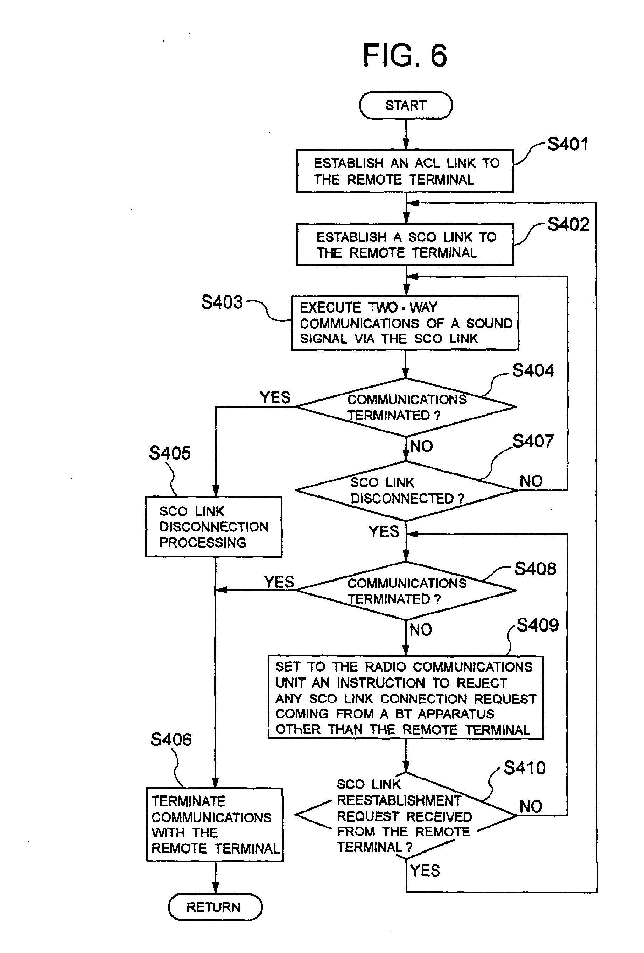

Next, a variation of the first embodiment will be described referring to the flowcharts of Fig. 5 and Fig. 6.

In this variation, a processing to secure reestablishing of the SCO link between the headset and the car navigation apparatus in case transmission of a sound signal is restarted after the SCO link temporarily disconnected (step 108) is added in the first embodiment shown in Fig. 3.

According to the first embodiment, in case a connection request for establishing the SCO link is received from a BT apparatus other than the car navigation apparatus, such as a cellular phone equipped with a BT radio communications terminal, after the SCO link is temporarily disconnected in step 108 of Fig. 3, the following problem arises. In case a predetermined condition is satisfied, the SCO link is established between both BT radio communications terminals on the cellular phone and the headset. In case the new SCO link uses HV1 packets, or three SCO links using HV3 packets are set, all the voice communications channels using the SCO link between both apparatuses are occupied. Thus, an attempt by the headset to restart voice communications with the car navigation apparatus finds no vacant voice communications channels using the SCO link, thus disabling the reestablishment of the SCO link.

This problem is solved by a variation of the first embodiment in this example. The following variation may be implemented by only modifying the application program in the control unit 12 of the BT radio communications terminal. The configuration of the BT terminal is the same as that in the first embodiment.

Operation in the BT radio communications terminal on the headset is explained in the flowchart of Fig. 5.

In Fig. 5, the procedure from start of operation to temporary disconnection of the SCO link in step 308 is the same as that in the flowchart of Fig. 3, so that the corresponding description is omitted.

The control unit 12 of the BT radio communications terminal on the headset temporarily disconnects the SCO link in step 308, then determines whether termination of the communication processing using a sound signal is instructed in the next step 309. In case the communication processing is terminated, execution proceeds to termination of communications in step 306, same as the case in Fig. 3.

In case the communication processing using a sound signal is not terminated, execution proceeds to step 310. A instruction is issued to the radio communications unit 11, to reject any connection request using the SCO link coming from a BT apparatus other than the car navigation apparatus. This ensures that the BT module on the headset can reestablish the SCO link with the BT module on the car navigation apparatus when voice transmission is restarted.

More particularly, the BT module in the radio communications unit 11 stores a BT device address of the BT module on the car navigation apparatus that is engaged in voice transmission via the SCO link in the internal flash memory. In response to paging by another BT apparatus after disconnection of the SCO link in step 308, the BT module checks the BT device address of the distant BT apparatus obtained in the course of such paging. In case the BT device address does not match that stored in the memory, connection with the paging BT apparatus is rejected.

When the SCO link reestablishment ensuring processing in step 310 is over, the controller 12 proceeds to step 311 where absence of the sound signal is detected. The subsequent procedure is the same as that in Fig. 3.

In establishment of an SCO link in a BT radio communications system, the number of voice communications channels that can be set depends on the type of the voice packets used, as mentioned above. Thus, the SCO link reestablishment ensuring processing in the step 310 may be activated when only one voice communications channel is available in the application program.

To ensure reestablishment of the SCO link between both BT apparatus, it is necessary to perform the SCO link reestablishment ensuring processing also at the BT radio communications terminal on the car navigation apparatus. The following processing is also required in the car navigation apparatus shown in Fig. 4. That is, the BT radio communications terminal on the car navigation apparatus rejects any connection request coming from a BT apparatus other than the headset, after the temporary disconnection of the SCO link to the reestablishment of the SCO link. Then, the BT radio communications terminal must ensure the reestablishment of the SCO link with the headset.

Operation of the BT radio communications terminal on the car navigation apparatus concerning the SCO link reestablish assuring processing will be described referring to the flowchart of Fig. 6. The processing in Fig. 6 is almost the same as that at the BT radio communications terminal on the car navigation apparatus described referring to Fig. 4, so that the difference from the flowchart of Fig. 4 will be described below.

In step 408 shown in Fig. 6 (corresponding to step 208 of Fig. 4), in case it is determined that the communication processing using the sound signal is not terminated, execution proceeds to step 409. An instruction is set from the control unit 12 to the BT module in the radio communications unit 11, to reject any SCO link connection request coming from a BT apparatus other than the headset. In this case, a BT apparatus may be identified using the BT device address of a distant party, same as the case in Fig. 5.

In the flowchart of Fig. 6, the procedure subsequent to execution of processing in step 409, or determination of termination of communications using a sound signal in step 408 is the same as that in Fig. 4, so that the corresponding description is omitted.

The SCO link reestablishment ensuring processing on the car navigation apparatus shown in Fig. 6 may be activated when only one voice communications channel is available, same as the headset.

In the processing in the headset shown in Fig. 5, temporary disconnection of the SCO link may be transmitted from the headset to the car navigation apparatus, during or after the temporary disconnection of the SCO link in step 308. For example, the headset may transmit a signal to indicate temporary disconnection of the SCO link to the car navigation apparatus via an ACL link. The car navigation apparatus may use the signal to activate the SCO link reestablishment ensuring processing in step 409 in Fig. 6.

The second embodiment of the invention will be described.

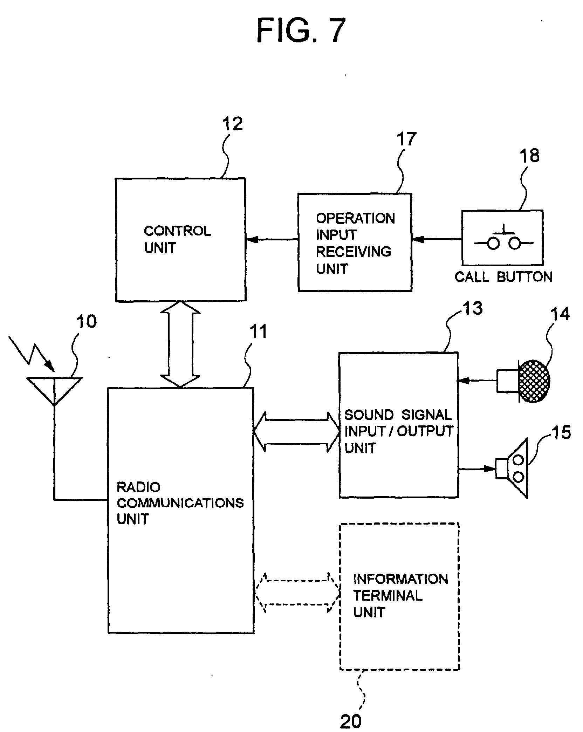

The configuration of this embodiment is shown in the block diagram of Fig. 7. The basic configuration shown in the block diagram is the same as that in the first embodiment shown in Fig. 1, so that only the difference will be described below.

This embodiment comprises an operation input receiving unit 17 and a call button 18 instead of the sound signal detection unit 16 of Fig.1. This embodiment provides a system where operation of the call button 18, instead of detection of a sound signal in the first embodiment, disconnects and reestablishes the SCO link.

The call button 18 is pressed by the user wishing the operation by way of voice recognition on a car navigation apparatus. As long as the call button 18 is held down, a voice from the user is accepted by the voice recognition part in the car navigation apparatus.

The operation input receiving unit 17 is an interface part for extracting the contact signal ON/OFF information from the call button 18 into the control unit 12. The operation input receiving unit 17 may comprise a predetermined latch circuit or chattering prevention circuit as required.

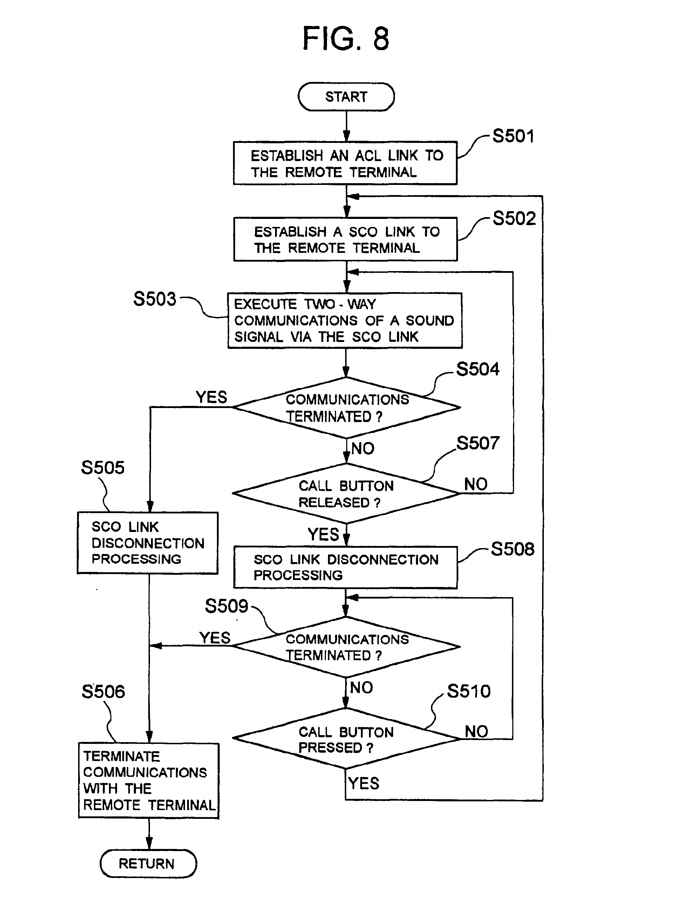

Partial configuration including the call button 18 and the operation input receiving unit 17 may be provided on the headset or on the car navigation apparatus. The application program concerning the SCO link control by the BT radio communications terminal provided with the call button 18 is as shown in the flowchart of Fig. 8. The application program of the distant party is the same as that shown in Fig. 4.

The second embodiment as described below assumes that the call button 18 is provided on the headset.

The operation in the second embodiment is shown in the flowchart of Fig. 8.

The operation shown in the flowchart of Fig. 8 is basically same as the processing in Fig. 3.

The difference is that the determination of a sound signal not being detected in step 107 in Fig. 3 is replaced with the determination of the call button 18 being turned OFF in the corresponding step 507 in Fig. 8, and that the determination of a sound signal not being detected in step 110 in Fig. 3 is replaced with the determination of the call button 18 being turned ON in the corresponding step 510 in Fig. 8.

In the second embodiment, in case it is determined that the communication processing using a sound signal is not terminated in step 504, execution proceeds to step 507 to determine whether the call button 18 is released, that is, the call button 18 is turned OFF. In case the call button 18 is released, it is assumed that the user wishes to temporarily suspend operation through the voice recognition. Execution proceeds to the nest step 508 and the SCO link is disconnected.

In case the call button 18 is not released in step 507, or the call button 18 is turned ON, the user wishes to continue operation through the voice recognition. Execution thus returns to step 503 to continue the sound signal transmission via the SCO link.

In case it is determined that the communication processing using a sound signal is not terminated in step 509 after the SCO link is once disconnected, execution proceeds to step 510 to determine whether the call button 18 is pressed or the call button 18 is turned ON. In case the call button 18 is pressed, it is assumed that the user has restarted the operation through the voice recognition. Execution returns to step 502 and the SCO link is reestablished.

When the call button 18 is not pressed, or the call button 18 remains OFF in step 510, execution returns to step 509 to repeat monitoring of termination of the communication processing using a sound signal.

AS described earlier, in the second embodiment, an SCO link is established between the headset and the car navigation apparatus only when the user presses the call button 18. This prevents transmission of unwanted packets. In particular, the ON/OFF signal of the call button 18 is used to disconnect or reestablish the SCO link in this embodiment. This prevents malfunction caused by taking a noise as a sound signal. And initial call disconnection at reestablishing of the SCO link is avoided, because the user typically starts conversation after the user has pressed the call button 18.

The embodiment including the SCO link reestablishment ensuring processing (Fig. 5 and Fig. 6) referred to as a variation of the first embodiment may be incorporated into the second embodiment as a variation of the same.

As described hereabove, it is possible to halt transmission of silent packets that occupy over 60 percent of the total SCO link connection period. Thus, using the time slot in the halt period may be used for an ACL link for data transmission, thus improving the efficient use of channels in a BT radio communications system.

It is also possible to inhibit transmission of an unwanted radio wave from a BT radio communications terminal as well as to attain reduction of the power consumption.

It is understood that the forgoing description and accompanying drawings set forth the preferred embodiments of the invention at the present time. Various modification, additions and alternative designs will, of course, become apparent to those skilled in the art in light of the forgoing teachings without departing from the spirit and scope of the disclosed invention. Thus, it should be appreciated that that the invention is not limited to the disclosed embodiments but may be practiced within the full scope of the appended claims.

## Claims

**1.** A radio communications terminal that establishes a radio communications channel to a remote terminal for transmitting a signal by using time slots that have undergone time-division processing and transmits a sound signal via said radio communications channel, comprising:

a radio communications part which establishes said radio communications channel and transmits a sound signal via said radio communications channel; and.

a control part which controls establishment of the radio communications channel by said radio communications part, and transmission of the sound signal via said radio communications channel, wherein

after said radio communications channel is established, said control part controls said radio communications part to disconnect or reestablish said radio communications channel, based on a disconnection instruction signal or a reestablishment instruction signal.

2. A radio communications terminal according to claim 1, further comprising a sound signal detection part which detects whether the sound signal is present or absent on said radio communications channel, wherein

after said radio communications channel is established, said sound signal detection part generates said disconnection instruction signal when absence of the sound signal is detected on said radio communications channel, and generates said reestablishment instruction signal when the sound signal is detected again on said radio communications channel.

3. A radio communications terminal according to claim 1, further comprising an operation input receiving part which generates said disconnection instruction signal or said reestablishment instruction signal based on an operation input, after said radio communications channel is established.

4. A radio communications terminal according to claim 1, further comprising a channel reestablishing part which ensures the reestablishment of the radio communications channel to the remote terminal, wherein

after the radio communications channel to the remote terminal is disconnected by said disconnection instruction signal, and up to when said reestablishment instruction signal is generated, said channel reestablishing part controls said radio communications part to ensure the reestablishment of the radio communications channel to the remote terminal.

5. A radio communications terminal according to claim 2, further comprising a channel reestablishing part which ensures the reestablishment of the radio communications channel to the remote terminal, wherein

after the radio communications channel to the remote terminal is disconnected by said disconnection instruction signal, and up to when said reestablishment instruction signal is generated, said channel reestablishing part controls said radio communications part to ensure the reestablishment of the radio communications channel to the remote terminal.

6. A radio communications terminal according to claim 3, further comprising a channel reestablishing part which ensures the reestablishment of the radio communications channel to the remote terminal, wherein

after the radio communications channel to the remote terminal is disconnected by said disconnection instruction signal, and up to when said reestablishment instruction signal is generated, said channel reestablishing part controls said radio communications part to ensure the reestablishment of the radio communications channel to the remote terminal.

7. A radio communications terminal according to claim 1, wherein a synchronous connection oriented communications link in a Bluetooth radio system is used as said radio communications channel, and a radio terminal module in the Bluetooth radio system is used as said radio communications part.

8. A radio communications terminal that establishes a radio communications channel to a remote terminal for transmitting a signal and transmits a sound signal via said radio communications channel, comprising:

a radio communications part which establishes said radio communications channel and transmits a sound signal via said radio communications channel; and

a control part which controls establishment of the radio communications channel by said radio communications part, and transmission of the sound signal via said radio communications channel, wherein

said control part controls said radio communications part to disconnect or reestablish said radio communications channel, on the basis of whether or not transmission of said sound signal meets a predetermined condition.

9. A radio communications method that establishes a radio communications channel between a radio communications terminal and a remote terminal such that said radio communications terminal transmits a sound signal to said remote terminal via said radio communications channel, comprising the steps of:

A) establishing said radio communications channel and transmitting said sound signal via said radio communications channel;
B) determining whether or not transmission of said sound signal meets a predetermined condition;
C) determining whether said radio communications channel should be disconnected or reestablished, on the basis of a determination made in Step B; and
D) disconnecting said radio communications channel when Step C determines disconnection, and reestablishing said radio communications channel when Step C determines reestablishment.

# FIG. 1A

IN CASE SOUND SIGNAL DATA IS TRANSMITTED USING
HV1 MODE PACKETS ON AN SCO LINK

HV1 PACKET

MASTER

TIME

SLAVE

TIME

1 TIME SLOT
( 625 μS )

2 TIME SLOTS
( 1. 25mS )

⬚ TRANSMIT PACKETS    ☐ RECEIVE PACKETS

# FIG. 1B

IN CASE SOUND SIGNAL DATA IS TRANSMITTED USING
HV3 MODE PACKETS ON AN SCO LINK

HV3 PACKET

MASTER

TIME

SLAVE

TIME

1 TIME SLOT
( 625 μS )

6 TIME SLOTS ( 3. 75mS )

# FIG. 2

# FIG. 3

START

ESTABLISH AN ACL LINK TO THE REMOTE TERMINAL — S101

ESTABLISH A SCO LINK TO THE REMOTE TERMINAL — S102

S103 — EXECUTE TWO - WAY COMMUNICATIONS OF A SOUND SIGNAL VIA THE SCO LINK

COMMUNICATIONS TERMINATED ? — S104
YES
NO

SOUND SIGNAL NOT DETECTED ? — S107
NO
YES

S105 — SCO LINK DISCONNECTION PROCESSING

SCO LINK DISCONNECTION PROCESSING — S108

COMMUNICATIONS TERMINATED ? — S109
YES
NO

SOUND SIGNAL NOT DETECTED ? — S110
YES
NO

S106 — TERMINATE COMMUNICATIONS WITH THE REMOTE TERMINAL

RETURN

# FIG. 4

```
                    ┌─────────┐
                    │  START  │
                    └────┬────┘
                         │
              ┌──────────▼──────────────┐      S201
              │ ESTABLISH AN ACL LINK TO│
              │  THE REMOTE TERMINAL    │
              └──────────┬──────────────┘
                         │
              ┌──────────▼──────────────┐      S202
              │ ESTABLISH A SCO LINK TO │
              │  THE REMOTE TERMINAL    │
              └──────────┬──────────────┘
                         │
      S203   ┌───────────▼─────────────┐
             │ EXECUTE TWO - WAY       │
             │ COMMUNICATIONS OF A SOUND│
             │ SIGNAL VIA THE SCO LINK │
             └───────────┬─────────────┘
                         │
              YES    ◇───▼───◇             S204
         ◄─────────  COMMUNICATIONS
                     TERMINATED ?
                     ◇───┬───◇
                         │ NO             S207
                     ◇───▼───◇
                     SCO LINK          NO
                     DISCONNECTED ? ──────►
                     ◇───┬───◇
                         │ YES
      S205                │
  ┌──────────┐            │
  │ SCO LINK │        ◇───▼───◇          S208
  │DISCONNECTION   YES COMMUNICATIONS
  │PROCESSING  ◄──────  TERMINATED ?
  └────┬─────┘        ◇───┬───◇
       │                  │ NO
       │                  │              S209
       │              ◇───▼───◇
  S206 │              SCO LINK
       │              REESTABLISHMENT    NO
  ┌────▼─────────┐    REQUEST RECEIVED ──►
  │ TERMINATE    ◄─── FROM THE REMOTE
  │COMMUNICATIONS     TERMINAL ?
  │WITH THE           ◇───┬───◇
  │REMOTE TERMINAL│       │ YES
  └────┬─────────┘
       │
  ┌────▼────┐
  │ RETURN  │
  └─────────┘
```

# FIG. 5

START

ESTABLISH AN ACL LINK TO
THE REMOTE TERMINAL — S301

ESTABLISH A SCO LINK TO
THE REMOTE TERMINAL — S302

S303 — EXECUTE TWO - WAY
COMMUNICATIONS OF A SOUND
SIGNAL VIA THE SCO LINK

COMMUNICATIONS
TERMINATED ? — S304

YES

NO

SOUND SIGNAL
NOT DETECTED ? — S307

NO

S305

SCO LINK
DISCONNECTION
PROCESSING

YES

SCO LINK DISCONNECTION
PROCESSING — S308

S309 — COMMUNICATIONS
TERMINATED ?

YES

NO

SET TO THE RADIO COMMUNICATIONS
UNIT AN INSTRUCTION TO REJECT
ANY SCO LINK CONNECTION REQUEST
COMING FROM ANOTHER TERMINAL — S310

S306

TERMINATE
COMMUNICATIONS
WITH THE
REMOTE TERMINAL

SOUND SIGNAL
NOT DETECTED ? — S311

YES

NO

RETURN

15

# FIG. 6

START

ESTABLISH AN ACL LINK TO
THE REMOTE TERMINAL — S401

ESTABLISH A SCO LINK TO
THE REMOTE TERMINAL — S402

S403 — EXECUTE TWO - WAY
COMMUNICATIONS OF A SOUND
SIGNAL VIA THE SCO LINK

COMMUNICATIONS
TERMINATED ? — S404
YES → NO

S407 — SCO LINK
DISCONNECTED ? — NO
YES

S405 — SCO LINK
DISCONNECTION
PROCESSING

COMMUNICATIONS
TERMINATED ? — S408
YES → NO

S409 — SET TO THE RADIO COMMUNICATIONS
UNIT AN INSTRUCTION TO REJECT
ANY SCO LINK CONNECTION REQUEST
COMING FROM A BT APPARATUS
OTHER THAN THE REMOTE TERMINAL

SCO LINK
REESTABLISHMENT
REQUEST RECEIVED
FROM THE REMOTE
TERMINAL ? — S410
NO
YES

S406 — TERMINATE
COMMUNICATIONS
WITH THE
REMOTE TERMINAL

RETURN

# FIG. 7

# FIG. 8

```
                        ( START )
                            │
                            ▼
        ┌──────────────────────────────┐── S501
        │ ESTABLISH AN ACL LINK TO     │
        │ THE REMOTE TERMINAL          │
        └──────────────────────────────┘
                            │
                            ▼
        ┌──────────────────────────────┐── S502
        │ ESTABLISH A SCO LINK TO      │
        │ THE REMOTE TERMINAL          │
        └──────────────────────────────┘
                            │
                            ▼
 S503── ┌──────────────────────────────┐
        │ EXECUTE TWO - WAY            │
        │ COMMUNICATIONS OF A SOUND    │
        │ SIGNAL VIA THE SCO LINK      │
        └──────────────────────────────┘
                            │
                            ▼
                                          S504
            YES        ◇ COMMUNICATIONS ◇
        ◄──────────────  TERMINATED ?
                            │ NO        S507
 S505                       ▼
                                          NO
                      ◇ CALL BUTTON ◇ ──────►
                        RELEASED ?
 ┌──────────────┐           │ YES
 │ SCO LINK     │           ▼
 │ DISCONNECTION │   ┌────────────────────────┐── S508
 │ PROCESSING    │   │ SCO LINK DISCONNECTION │
 └──────────────┘   │ PROCESSING             │
                     └────────────────────────┘
 S509 ──                     │
                             ▼
            YES        ◇ COMMUNICATIONS ◇
        ◄──────────────  TERMINATED ?
                             │ NO        S510
 S506                        ▼
                                          NO
                      ◇ CALL BUTTON ◇ ──────►
                        PRESSED ?
 ┌──────────────┐            │ YES
 │ TERMINATE    │
 │ COMMUNICATIONS│
 │ WITH THE     │
 │ REMOTE TERMINAL│
 └──────────────┘
        │
        ▼
   ( RETURN )
```

**European Patent**
**Office**

## EUROPEAN SEARCH REPORT

Application Number

EP 02 01 0943

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 045 559 A (LUCENT TECHNOLOGIES INC) 18 October 2000 (2000-10-18) * abstract * * column 3, line 20 - line 40 * * column 3, line 55 - column 4, line 5 * * column 6, line 50 - column 7, line 25 * * column 8, line 50 - column 9, line 5 * ---- | 1-9 | H04L12/56 |

TECHNICAL FIELDS
SEARCHED (Int.Cl.7)

H04L

The present search report has been drawn up for all claims

| Place of search | Date of completion of the search | Examiner |
|---|---|---|
| BERLIN | 16 September 2002 | Martínez Martínez, V |

EPO FORM 1503 03.82 (P04C01)

## ANNEX TO THE EUROPEAN SEARCH REPORT
## ON EUROPEAN PATENT APPLICATION NO.

EP 02 01 0943

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2002

| Patent document cited in search report | | Publication date | Patent family member(s) | | Publication date |
|---|---|---|---|---|---|
| EP 1045559 | A | 18-10-2000 | EP | 1045559 A1 | 18-10-2000 |
| | | | AU | 3179600 A | 14-11-2000 |
| | | | WO | 0062491 A1 | 19-10-2000 |